# EUROPÄISCHE PATENTSCHRIFT

(11) **EP 3 347 887 B1**
(45) Veröffentlichungstag und Bekanntmachung des Hinweises auf die Patenterteilung: **01.07.2020**
(21) Anmeldenummer: 16736444.7
(22) Anmeldetag: 07.07.2016
(51) Int. Cl.: G08G 1/14, G08G 1/16, B62D 15/02

(54) **VERFAHREN ZUM AUTOMATISIERTEN FAHREN EINES FAHRZEUGS, INSBESONDERE EINES KRAFTFAHRZEUGS, ZUM ANSTEUERN EINER PARKPOSITION**
METHOD FOR THE AUTOMATED DRIVING OF A VEHICLE, IN PARTICULAR OF A MOTOR VEHICLE, IN ORDER TO APPROACH A PARKING POSITION
PROCÉDÉ DE CONDUITE AUTOMATISÉE D'UN VÉHICULE, EN PARTICULIER D'UN VÉHICULE AUTOMOBILE, POUR SE DIRIGER VERS UNE POSITION DE STATIONNEMENT

(30) Priorität: 08.09.2015 DE 102015011486; 22.06.2016 DE 102016211184
(43) Veröffentlichungstag der Anmeldung: 18.07.2018
(73) Patentinhaber: Volkswagen Aktiengesellschaft, 38440 Wolfsburg (DE)
(72) Erfinder: DERENDARZ, Wojciech Waclaw, 38106 Braunschweig (DE); MÜHLFELLNER, Peter, 8005 Zürich (CH); GRYSCZYK, Sebastian, 38102 Braunschweig (DE); JUNGE, Lutz, 38106 Braunschweig (DE); WALDMANN, Rene, 38527 Meine (DE); WONNEBERGER, Stefan, 38106 Braunschweig (DE); HOLLEIS, Thomas, CA 95134 San Jose (US); BRÜNING, Stefan, Berlin 10783 (DE); HORSTMANN, Sven, 12163 Berlin (DE); BRUMMER, Clemens, 10247 Berlin (DE); BARTHOLOMAEUS, Marc, Berlin 13086 (DE); STELLMACHER, Martin, 14612 Falkensee (DE); NICKLAS, Marcel, 09122 Chemnitz (DE); PUCKS, Fabian, 12167 Berlin (DE); LAST, Carsten, 38102 Braunschweig (DE)
(86) Internationale Anmeldenummer: PCT/EP2016/066113
(87) Internationale Veröffentlichungsnummer: WO 2017/041927

(56) Entgegenhaltungen:
- DE-A1-102010 049 585
- DE-A1-102013 222 071
- US-A1- 2010 156 672
- US-A1- 2012 188 100

## Beschreibung

Die Erfindung betrifft ein Verfahren zum automatisierten Fahren eines Fahrzeugs, insbesondere eines Kraftfahrzeugs, zum Ansteuern einer Parkposition. Ferner betrifft die Erfindung eine zugehörige Fahrzeugvorrichtung, ein zugehöriges Verfahren zum Betreiben eines Systems und ein System zum automatisierten Fahren eines Fahrzeugs, insbesondere eines Kraftfahrzeugs, zum Ansteuern einer Parkposition.

Moderne Fahrzeuge, insbesondere Kraftfahrzeuge, weisen eine Vielzahl von Assistenzsystemen auf, welche einen Fahrer beim Führen des Fahrzeugs unterstützen. Es kommen beispielsweise Bremsassistenten, Spurhalteassistenten und Abstandshalteassistenten zum Einsatz.

Aus der DE 10 2012 200 068 A1 ist ein Verfahren zum Betreiben eines Fahrerassistenzsystems eines Fahrzeugs bekannt, umfassend die folgenden Schritte: Empfangen von an das Fahrzeug gesendeten Umfelddaten, Verwenden der empfangenen Umfelddaten für eine Entscheidung, ob das Fahrerassistenzsystem eine Fahrerassistenzfunktion bereitstellen soll oder nicht, wobei ein Archivieren der verwendeten Daten erfolgen soll. Ferner sind ein Fahrerassistenzsystem für ein Fahrzeug, ein System zum Betreiben eines Fahrerassistenzsystems für ein Fahrzeug sowie ein Computerprogramm beschrieben.

Ferner ist es bekannt, ein Fahrzeug automatisiert entlang einer bereitgestellten Trajektorie in eine Parkposition zu führen. Dazu werden die Lenkung und der Antrieb des Fahrzeugs derart von einer Steuerung gesteuert, dass das Fahrzeug automatisiert entlang der bereitgestellten Trajektorie in die Parkposition geführt wird. Ein solches Verfahren ist beispielsweise aus der DE 10 2013 015 349 A1 bekannt.

Aus der US 2012/0188100 A1 sind eine Vorrichtung und ein Verfahren zum Bereitstellen eines individuell angepassten automatisierten Bring- und Holdienstes für Fahrzeuge (Auto-Valet Parking) bekannt. Aus der DE 10 2010 049 585 A1 ist ein Verfahren und eine Vorrichtung zur Unterstützung eines Fahrzeugführers eines Fahrzeugs bei einem Parkmanöver bekannt. Aus der US 2010/0156672 A1 sind ferner ein System und ein Verfahren für einen Hol- und Bringdienst für Fahrzeuge (Auto Valet-Parking) bekannt. Die DE 10 2013 222 071 A1 beschreibt ein Parkraumverwaltungssystem, welches mit autonom fahrenden Fahrzeugen einen Hol- und Bringdienst (Valet-Parking-Funktion) bereitstellt. Die DE 10 2013 222071 A1 ist als nächstliegender Stand der Technik nach dem Oberbegriff der Ansprüche 1 und 8 zu sehen.

Der Erfindung liegt das technische Problem zu Grunde, ein Verfahren, eine Fahrzeugvorrichtung, ein Verfahren zum Betreiben eines Systems und ein System zum automatisierten Fahren eines Fahrzeugs zum Ansteuern einer Parkposition zu schaffen, bei der das Bereitstellen der Trajektorie verbessert ist.

Die technische Aufgabe wird erfindungsgemäß durch ein Verfahren mit den Merkmalen des Patentanspruchs 1, eine Fahrzeugvorrichtung mit den Merkmalen des Patentanspruchs 8, ein Verfahren zum Betreiben eines Systems mit den Merkmalen des Patentanspruchs 9 und ein System mit den Merkmalen des Patentanspruchs 13 gelöst. Vorteilhafte Ausgestaltungen der Erfindung ergeben sich aus den Unteransprüchen.

Im Folgenden soll eine Trajektorie eine geordnete Menge parametrisierter Positionsdaten einer Bahnkurve in einem Umfeld und weitere Daten umfassen. Diese weiteren Daten können in dem Umfeld vorhandene Merkmale und/oder daraus abgeleitete Merkmale sein, beispielsweise visuelle Abbildungen, Metadaten oder Positionsdaten von physischen Objekten in dem Umfeld. Die weiteren Daten sollen dabei insbesondere eine im Vergleich zu satellitengestützten Globalen Positionsbestimmungs- und Navigationssystemen (z.B. GPS) verbesserte Lokalisierung des Fahrzeugs in dem Umfeld erlauben.

Insbesondere kann vorgesehen sein, dass eine Trajektorie Umfeldortungsdaten umfasst, die es einer Sensorik des Fahrzeugs ermöglichen, sich präzise im Umfeld des Fahrzeugs zu lokalisieren. Vorzugsweise erfolgt eine Lokalisierung des Fahrzeugs hinsichtlich der Position im einer Genauigkeit von etwa +/-10 cm und einer Orientierungsgenauigkeit von etwa +/-1 °, vorzugsweise mit einer Positionsgenauigkeit von +/-5 cm und einer Orientierungsgenauigkeit von etwa +/-0,5 ° oder besser.

Ein Fahrzeug soll im Folgenden ein Landfahrzeug bezeichnen. Insbesondere soll ein Fahrzeug ein Kraftfahrzeug zur angetriebenen Beförderung von Personen oder Gütern auf Straßen bezeichnen.

Den Hintergrund der Erfindung stellen insbesondere Assistenzsysteme dar, welche es einem Fahrzeug ermöglichen, eine Trajektorie in einer Lernfahrt anzulernen und die angelernte Trajektorie bei einer Folgefahrt automatisiert abzufahren.

Die Kernidee der Erfindung ist, eine zentrale Verwaltung für angelernte Trajektorien eines Assistenzsystems zum automatisierten Fahren eines Fahrzeugs in eine Parkposition zu schaffen. Für ein Fahrzeug wird beispielsweise eine Trajektorie von einer Startposition, beispielsweise einer Grundstückseinfahrt, hin zu einer Parkposition, beispielsweise einem Garagenstellplatz, erfasst und auf einem Server hinterlegt. Es ist dann vorgesehen, dass bei einer späteren Folgefahrt die aktuelle Position des Fahrzeugs an den Server übermittelt wird. Der Server sucht dann nach Trajektorien, welche eine oder mehrere Positionsdaten umfassen, die in einem Toleranzbereich zu der aktuellen/übermittelten Position liegen. Der Toleranzbereich stellt hierbei ein vorgegebenes Umfeld um die aktuelle Position dar, beispielsweise einen Umkreis mit einem Radius von 20 oder 50 m. Insbesondere werden hierbei Trajektorien berücksichtigt, die den Toleranzbereich durchlaufen und in die das Fahrzeug von seiner aktuellen Position aus durch eine für das Fahrzeug mögliche Bewegung überführbar ist. Insbesondere soll eine mögliche Bewegung eine Bewegung auf einer stetigdifferenzierbaren Bahnkurve sein, welche keine abrupten Richtungsänderungen (Knicke) aufweist. Die aufgefundenen Trajektorien übermittelt der Server an das Fahrzeug. In dem Fahrzeug findet dann eine Auswahl einer der übermittelten Trajektorien statt, beispielsweise durch einen Fahrer oder auf Grund weiterer Kriterien. Die ausgewählte Trajektorie wird dann anschließend automatisiert von dem Fahrzeug abgefahren. Die Erfindung hat den Vorteil, dass eine Verwaltung von hinterlegten Trajektorien verbessert ist. Diese können beispielsweise öffentlich oder nur unter speziellen Bedingungen zur Verfügung gestellt werden. Generell wird die Verwaltung durch ein zentralisiertes Hinterlegen und Bereitstellen der Trajektorien auf dem Server optimiert und der Komfort sowie die Flexibilität beim automatisierten Fahren hin zu Parkpositionen verbessert. Ferner ist die Anzahl hinterlegter Trajektorien nicht mehr durch einen Speicher in dem jeweiligen Fahrzeug begrenzt.

In einem ersten Aspekt wird insbesondere ein Verfahren zum automatisierten Fahren eines Fahrzeugs, insbesondere eines Kraftfahrzeugs, zum Ansteuern einer Parkposition zur Verfügung gestellt, umfassend die folgenden Schritte: Bereitstellen einer Trajektorie für eine Steuerung des Fahrzeugs, Erzeugen von Signalen zum Steuern einer Bewegung des Fahrzeugs entlang der bereitgestellten Trajektorie, wobei das Bereitstellen der Trajektorie folgende Schritte umfasst: Ermitteln einer aktuellen Position des Fahrzeugs durch eine Positionsermittlungseinrichtung, Aufbauen einer Kommunikationsverbindung zu einem Server außerhalb des Fahrzeugs durch eine Kommunikationseinrichtung, Übermitteln der ermittelten aktuellen Position des Fahrzeugs an den Server über die Kommunikationsverbindung, Abrufen und Empfangen mindestens einer beim Server hinterlegten Trajektorie über die Kommunikationsverbindung, wobei die abgerufene und empfangene Trajektorie zumindest durch einen Toleranzbereich um die ermittelte aktuelle Position des Fahrzeugs verläuft.

Ferner wird gemäß eines zweiten Aspekts eine Fahrzeugvorrichtung für ein Fahrzeug zum automatisierten Fahren des Fahrzeugs, insbesondere eines Kraftfahrzeugs, zum Ansteuern einer Parkposition geschaffen, umfassend eine Steuerung, welche derart ausgebildet ist, Signale zum Steuern einer Bewegung des Fahrzeugs entlang einer bereitgestellten Trajektorie zu erzeugen, wobei die Fahrzeugvorrichtung eine Positionsermittlungseinrichtung und eine Kommunikationseinrichtung umfasst, wobei die Positionsermittlungseinrichtung derart ausgebildet ist, eine aktuelle Position des Fahrzeugs zu ermitteln, und wobei die Steuerung ferner derart ausgebildet ist, eine Kommunikationsverbindung zu einem Server außerhalb des Fahrzeugs über die Kommunikationseinrichtung aufzubauen, die ermittelte aktuelle Position des Fahrzeugs an den Server zu übermitteln, und mindestens eine beim Server hinterlegte Trajektorie über die Kommunikationsverbindung abzurufen und zu empfangen.

In einem dritten Aspekt wird ein Verfahren zum Betreiben eines Systems zum automatisierten Fahren mindestens eines Fahrzeugs, insbesondere eines Kraftfahrzeugs, zur Verfügung gestellt, umfassend die folgenden Schritte: Durchführen des im ersten Aspekt beschriebenen Verfahrens durch mindestens ein Fahrzeug und Durchführen der folgenden Schritte in einem Server: Empfangen einer aktuellen Position des mindestens einen Fahrzeugs über eine Kommunikationsverbindung mit dem mindestens einen Fahrzeug, Aufsuchen und Bereitstellen mindestens einer hinterlegten Trajektorie, wobei die hinterlegte Trajektorie zumindest durch einen Toleranzbereich um die empfangene aktuelle Position des mindestens einen Fahrzeugs verläuft, Übermitteln der aufgefundenen und bereitgestellten mindestens einen hinterlegten Trajektorie über die Kommunikationsverbindung an das mindestens eine Fahrzeug.

In einem letzten Aspekt wird ein System zum automatisierten Fahren eines Fahrzeugs, insbesondere eines Kraftfahrzeugs, zum Ansteuern einer Parkposition geschaffen, umfassend mindestens ein Fahrzeug mit einer Fahrzeugvorrichtung gemäß dem zweiten Aspekt, wobei das System einen Server umfasst, wobei der Server derart ausgebildet ist, die ermittelte aktuelle Position des mindestens einen Fahrzeugs über die Kommunikationsverbindung zu empfangen, mindestens eine hinterlegte Trajektorie aufzusuchen und bereitzustellen, wobei die bereitgestellte mindestens eine Trajektorie zumindest durch einen Toleranzbereich um die empfangene aktuelle Position des mindestens einen Fahrzeugs verläuft, und die bereitgestellte mindestens eine hinterlegte Trajektorie über die Kommunikationsverbindung an das mindestens eine Fahrzeug zu übermitteln.

Für den Umkreis einer aktuellen Position des Fahrzeugs kann auch mehr als eine Trajektorie hinterlegt sein. Dieses ist beispielsweise der Fall, wenn ein Fahrzeug auf einer Grundstückeinfahrt steht und die Möglichkeit hat, sowohl den linken als auch den rechten Garagenplatz einer Doppelgarage anzufahren. Gibt es mehrere Möglichkeiten, so muss eine Auswahl getroffen werden. Erfindungsgemäß ist deshalb vorgesehen, dass, wenn zu der mindestens einen abgerufenen und empfangenen Trajektorie eine weitere Trajektorie abgerufen und empfangen wird, von der Steuerung eine dieser Trajektorien in Abhängigkeit eines Auswahlparameters ausgewählt wird.

Insbesondere ist hierbei vorteilhafterweise vorgesehen, dass der Auswahlparameter aus einer erfassten Nutzerinteraktion abgeleitet wird, wobei die mindestens eine abgerufene und empfangene Trajektorie und die weitere abgerufene und empfangene Trajektorie einem Nutzer vor einem Erfassen der Nutzerinteraktion zur Auswahl angeboten werden. Beispielsweise können die empfangenen Trajektorien dem Nutzer auf einer Anzeige- und Bedieneinrichtung angezeigt werden, so dass der Nutzer dort eine Auswahl der gewünschten Trajektorie bzw. Parkposition treffen kann. Die ausgewählte Trajektorie wird dann der Steuerung bereitgestellt und anschließend automatisiert abgefahren. Eine solche Anzeige- und Bedieneinrichtung kann beispielsweise eine Multimediakonsole in dem Fahrzeug sein. Es kann aber auch vorgesehen sein, dass die Anzeige- und Bedieneinrichtung ein Smartphone oder ein Tabletcomputer ist. Der Nutzer kann dann auf komfortable Weise, beispielsweise durch Anwählen einer graphischen Repräsentation der Trajektorien, eine der Trajektorien auswählen.

Die in dem Server hinterlegten Trajektorien können beispielsweise in einer in dem Server gepflegten Karte hinterlegt sein. Einzelne Bereiche und Positionen in der Karte weisen beispielsweise eindeutige Zuordnungen zu globalen Positionen auf. Die hinterlegten Trajektorien werden dann den entsprechenden globalen Positionen zugeordnet.

Neben der aktuellen Position des Fahrzeugs können weitere Kriterien beim Aufsuchen von hinterlegten Trajektorien relevant sein. Beispielsweise können Präferenzen eines Fahrers oder Passagiers des Fahrzeugs vorliegen, welche beim Bereitstellen einer hinterlegten Trajektorie für eine automatisierte Fahrt berücksichtigt werden sollen. In einer vorteilhaften Ausführungsform ist deshalb vorgesehen, dass zusätzlich zu der aktuellen Position des Fahrzeugs mindestens ein Auswahlkriterium an den Server übermittelt wird. Der Server kann dann eine Auswahl von aufgesuchten, hinterlegten Trajektorien weiter einschränken durch das Auswahlkriterium.

In analoger Weise ist insbesondere bei einer Ausführungsform des Verfahrens zum Betreiben des Systems vorgesehen, dass das mindestens eine Auswahlkriterium des mindestens einen Fahrzeugs vom Server empfangen wird und das Aufsuchen und Bereitstellen der mindestens einen hinterlegten Trajektorie in Abhängigkeit des empfangenen Auswahlkriteriums durchgeführt wird.

Insbesondere kann ein solches Auswahlkriterium eine Individualisierungsinformation sein, welche das Fahrzeug oder den Fahrer oder Passagier des Fahrzeugs individuell kennzeichnet bzw. identifiziert. Eine solche Individualisierungsinformation kann beispielsweise eine Benutzerkennung oder ein Benutzerkonto sein, ähnlich solchen, welche im Internet verbreitet sind. Eine solche Individualisierungsinformation kann aber beispielsweise auch eine dem Fahrzeug zugeordnete Kennung sein, beispielsweise eine Fahrzeugnummer oder die Kennung auf einem Nummernschild des Fahrzeugs. Deshalb ist in einer vorteilhaften Ausführungsform vorgesehen, dass das mindestens eine Auswahlkriterium eine Individualisierungsinformation umfasst. Der Server ist nach dem Empfangen der Individualisierungsinformation beispielsweise in der Lage, individuell angepasste Trajektorien für die übermittelte Individualisierungsinformation aufzusuchen und bereitzustellen. Auf diese Weise ist es möglich, beispielsweise mehreren Benutzern einer Garage unterschiedlich bevorzugte Parkplätze zuzuweisen, indem für den entsprechenden Benutzer dann anhand der übermittelten Individualisierungsinformation lediglich diejenigen hinterlegten Trajektorien aufgesucht und an das Fahrzeug übermittelt werden, welche den Präferenzen des Benutzers entsprechen.

Es kann ferner aber auch vorgesehen sein, dass die Individualisierungsinformation anders ausgebildet ist. So kann beispielsweise auch einer hinterlegten Trajektorie oder einer Gruppe von hinterlegten Trajektorien eine solche Individualisierungsinformation zugeordnet sein. Auf diese Weise ist es möglich, beispielsweise zusammen mit einer Einladung eine Individualisierungsinformation zu übermitteln und hierüber dem Fahrzeug eines eingeladenen Gastes einen Parkplatz oder einen Parkplatzbereich auf einem dem Gast ansonsten unbekannten Grundstück zuzuweisen. Entsprechend können Parkplätze in einer Tiefgarage, einem Parkhaus oder sonstigen Parkplatzen zugewiesen werden. Auch ist es möglich, bei einem Fahrzeugwechsel, einem Fahrer trotzdem eine immer gleiche Trajektorie zur Verfügung zu stellen.

Ferner kann auch vorgesehen sein, dass das Auswahlkriterium einen Zustand des Fahrzeugs oder des Umfeldes des Fahrzeugs beschreibt, so dass je nach Zustand eine andere hinterlegte Trajektorie bereitgestellt wird. Deshalb ist in einer vorteilhaften Ausführungsform vorgesehen, dass das mindestens eine Auswahlkriterium einen Zustandsparameter umfasst. Ein solcher Zustandsparameter kann beispielsweise eine vorliegende Witterung, ein Straßenzustand oder ein Zustand des Fahrzeugs sein. Eine vorliegende Witterung kann beispielsweise über einen im Fahrzeug ausgebildeten Regensensor, einen Helligkeitssensor oder einen Schaltzustand der Heckscheibenheizung oder der Scheibenwischer ermittelt werden. Ein Straßenzustand kann beispielsweise durch eine Schlupfbestimmung (z.B. über eine Auswertung der Messdaten einer Elektronischen Stabilitätskontrolle etc.) bestimmt werden. Ein Zustand des Fahrzeugs kann beispielsweise eine Beladung des Fahrzeugs sein, so dass bei einem beladenen Fahrzeug beispielsweise hinterlegte Trajektorien ausgeschlossen werden, welche ein Entladen des Fahrzeugs erschweren oder behindern. Ein solcher Beladungszustand kann beispielsweise über entsprechende Sensoren an den Stoßfängern des Fahrzeugs ermittelt werden.

Ein Zustandsparameter kann beispielsweise auch eine Tageszeit, ein bestimmter Tag in der Woche oder im Monat sein, oder eine bestimmte Jahreszeit. Auf diese Weise wird es möglich, beispielsweise an verschiedenen Wochentagen unterschiedliche Trajektorien bereitzustellen und dadurch unterschiedliche Parkpositionen anzusteuern. So kann es beispielsweise möglich sein, an Wochenenden einen anderen Parkplatz zu nutzen als in der Woche. Sind beispielsweise bestimmte Merkmale im Umfeld des Fahrzeugs an Regentagen schwerer zu erfassen und zu erkennen als an Tagen mit besserem Wetter, so können selektiv Trajektorien für Regentage und Sonnentage bereitgestellt werden, so dass stets eine Trajektorie mit optimalen weiteren Daten bereitgestellt wird. So kann eine Bordsteinkante beispielsweise an trockenen Tagen ein sehr gut zu erkennendes Merkmal bilden; regnet es hingegen stark, so kann eine Pfütze die Kante vollständig überfluten, so dass nur die Oberfläche der Pfütze zu sehen ist und das gut erkennbare Merkmal der Bordsteinkante verschwunden ist. An Regentagen wird dann entsprechend eine andere Trajektorie mit anderen Merkmalen (beziehungsweise weiteren Daten) verwendet.

Ein Umfeld kann sich über die Zeit verändern, beispielsweise können physische Objekte ihren Ort wechseln, komplett verschwinden oder neu auftauchen. Es kann deshalb vorkommen, dass die zu einer Trajektorie hinterlegten weiteren Daten nicht mehr aktuell sind und aktualisiert werden müssen. Deshalb ist in einer vorteilhaften Ausführungsform vorgesehen, dass Trajektoriendaten einer Trajektorie des Fahrzeugs über Erfassungsmittel erfasst werden und von der Steuerung aufgezeichnet und über die Kommunikationsverbindung an den Server übermittelt werden.

Es ist hierbei dann vorgesehen, dass der Server die entsprechende hinterlegte Trajektorie aktualisiert. Deshalb ist vorteilhafterweise vorgesehen, dass zu einer in dem mindestens einen Fahrzeug aufgezeichneten Trajektorie Trajektoriendaten von dem Server empfangen werden und in dem Server hinterlegt werden oder eine in dem Server hinterlegte Trajektorie durch die empfangenen Trajektoriendaten aktualisiert und/oder ergänzt wird.

Nach dem Empfangen der mindestens einen hinterlegten Trajektorie, kann vorgesehen sein, die empfangenen Daten in einem Zwischenspeicher abzulegen. Deshalb ist in einer vorteilhaften Ausführungsform vorgesehen, dass die mindestens eine von dem Server empfangene Trajektorie in einem Zwischenspeicher im Fahrzeug hinterlegt wird. Dies hat den Vorteil, dass die Trajektoriendaten der mindestens einen hinterlegten Trajektorie auch bei eventuell auftretenden Problemen mit der Kommunikationsverbindung erhalten bleiben und der Fahrzeugvorrichtung zur Verfügung stehen, so dass eine automatisierte Fahrt hin zu der Parkposition weiterhin durchgeführt werden kann. Ein weiterer Vorteil eines Ablegens der Trajektorie in dem Zwischenspeicher ist, dass ein nachfolgendes Ausparken zumindest entlang der abgelegten mindestens eines Trajektorie immer möglich bleibt, selbst wenn die Kommunikationsverbindung zum Server nicht aufgebaut ist und ein Empfangen weiterer (alternativer) Trajektorien hierdurch nicht möglich ist. Hierzu umfasst die Fahrzeugvorrichtung beispielsweise einen Zwischenspeicher, beispielsweise einen dafür vorgesehenen Arbeitsspeicher oder einem Bereich in einen Arbeitsspeicher, beispielsweise in dem Arbeitsspeicher der Steuerung. Ferner kann auch ein nicht-flüchtiger Flashspeicher oder eine Festplatte dafür vorgesehen sein.

In einer weiteren Ausführungsform ist hingegen vorgesehen, dass die Trajektoriendaten der mindestens einen hinterlegten Trajektorie kontinuierlich an das Fahrzeug übermittelt werden, beispielsweise indem stets zu einer aktuellen Position des Fahrzeugs die zugehörigen Trajektoriendaten in Echtzeit oder mit einer geringen Datenpufferung übertragen werden.

Je nach Umfeld und Länge der Trajektorie könnten die Trajektoriendaten der hinterlegten Trajektorien große Datenmengen umfassen. Für den Fall, dass zu einem Grundstück oder einem Parkhaus etc. teilweise gemeinsame Abschnitte hin zu unterschiedlichen Parkpositionen abgefahren werden müssen, sind die Trajektoriendaten für den gemeinsamen Abschnitt gleich, so dass für diesen Abschnitt größtenteils redundante Daten vorliegen. In einer weiteren Ausführungsform ist deshalb vorgesehen, dass mehrere für einen Bereich hinterlegte Trajektorien von dem Server zu einem Trajektorienbaum zusammengefasst werden, sofern die mehreren Trajektorien gemeinsame Abschnitte aufweisen, und von dem Server entsprechend auch als Trajektorienbaum bereitgestellt und an das mindestens eine Fahrzeug übermittelt werden. Hierüber lässt sich eine Datenreduktion erreichen, so dass Bandbreite und Datenvolumen eingespart werden können. Ebenso kann hierdurch ein Speicherbedarf im Server reduziert werden.

Insbesondere kann dann weiter vorgesehen sein, dass zum Auswählen einer der als Trajektorienbaum übermittelten hinterlegten Trajektorien der Trajektorienbaum an einer Anzeige- und Bedieneinrichtung in dem Fahrzeug dargestellt wird. Dies ermöglicht eine übersichtliche Darstellung und ein komfortable Auswahl der gewünschten Parkposition durch eine Nutzerinteraktion des Nutzers.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Ausführungsform einer Fahrzeugvorrichtung zum automatisierten Fahren eines Fahrzeugs, insbesondere eines Kraftfahrzeugs, zum Ansteuern einer Parkposition;
- Fig. 2: eine schematische Darstellung eines Systems zum automatisierten Fahren eines Fahrzeugs, insbesondere eines Kraftfahrzeugs, zum Ansteuern einer Parkposition;
- Fig. 3: ein schematisches Ablaufdiagramm des Verfahrens zum Betreiben eines Systems zum automatisierten Fahren mindestens eines Fahrzeugs;
- Fig. 4: eine schematische Darstellung einer Grundstücksauffahrt und einer Doppelgarage zur Verdeutlichung des Verfahrens.

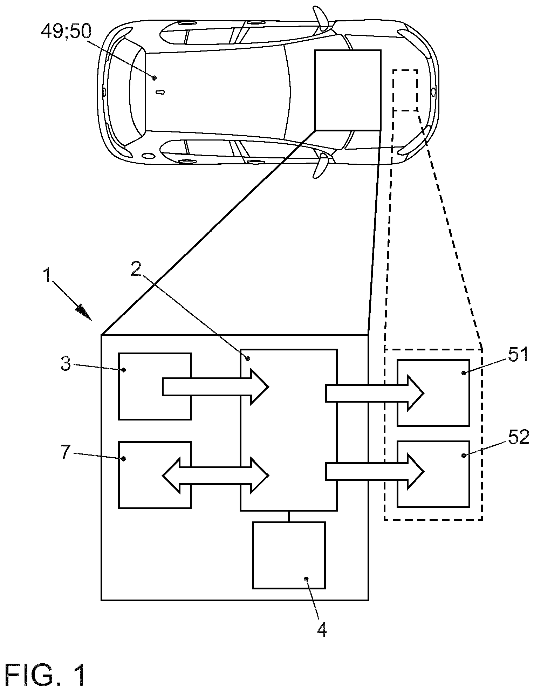

In Fig. 1 ist eine schematische Darstellung einer Ausführungsform einer Fahrzeugvorrichtung 1 zum automatisierten Fahren eines Fahrzeugs 49, in diesem Fall eines Kraftfahrzeugs 50, zum Ansteuern einer Parkposition gezeigt. Die Fahrzeugvorrichtung 1 umfasst eine Steuerung 2, eine Positionsermittlungseinrichtung 3 und eine Kommunikationseinrichtung 4. Hierbei können die Steuerung 2, die Positionsermittlungseinrichtung 3 und die Kommunikationseinrichtung 4 auch als Teile der Infrastruktur des Kraftfahrzeugs 50, beispielsweise ein bereits in dem Kraftfahrzeug 50 verbauter Bordcomputer, ein Navigationssystem oder eine Mobilfunkkommunikationseinrichtung etc., ausgebildet sein. Die Positionsermittlungseinrichtung 3 kann beispielsweise eine Globale Positionsermittlungseinrichtung (z.B. GPS) sein. Die Kommunikationseinrichtung 4 kann beispielsweise eine Car-to-Infrastructure-Verbindung sein, beispielsweise mittels einer Mobilfunkverbindung oder eines WLAN-Netzes. Die Steuerung 2 ist derart ausgebildet, mittels entsprechender Signale eine Längsregelung 51 und eine Querregelung 52 des Kraftfahrzeugs 50 zu steuern, um eine Bewegung des Kraftfahrzeugs 50 entlang einer bereitgestellten Trajektorie zu bewirken. Die bereitgestellte Trajektorie wird vorzugsweise in einem Zwischenspeicher 7 abgelegt.

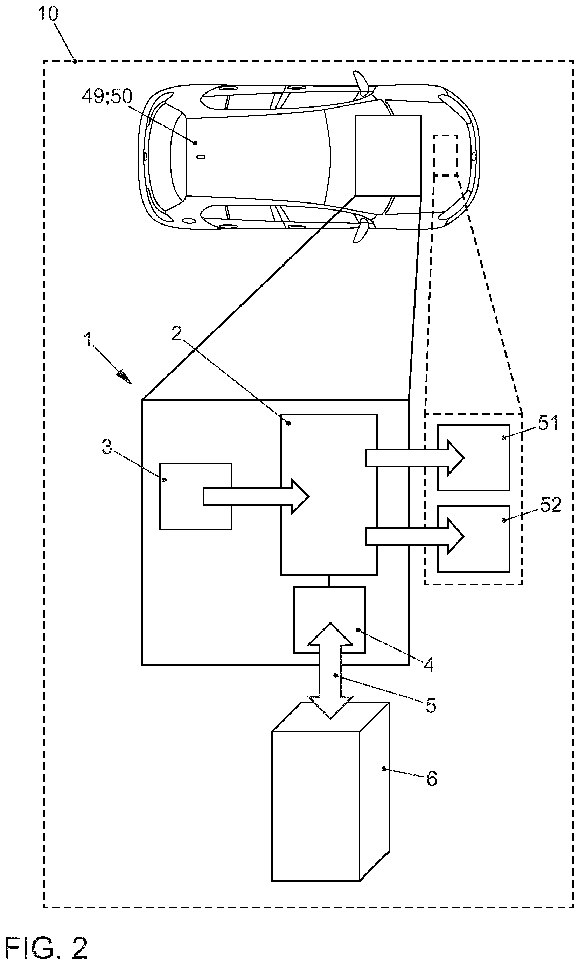

In Fig. 2 ist eine schematische Darstellung eines Systems zum automatisierten Fahren des Kraftfahrzeugs 50 zum Ansteuern einer Parkposition gezeigt. Dabei bezeichnen gleiche Bezugszeichen auch gleiche Merkmale bzw. Begriffe. Das System 10 umfasst mindestens ein Fahrzeug 49, hier ein Kraftfahrzeug 50, mit einer wie in Fig. 1 gezeigten Fahrzeugvorrichtung 1 und einen Server 6. Die Fahrzeugvorrichtung 1 kann über die Kommunikationseinrichtung 4 eine Kommunikationsverbindung 5, beispielsweise in Form einer Mobilfunkverbindung (GSM, EDGE, UMTS, LTE) oder einer WLAN-Verbindung etc., mit dem Server 6 aufbauen.

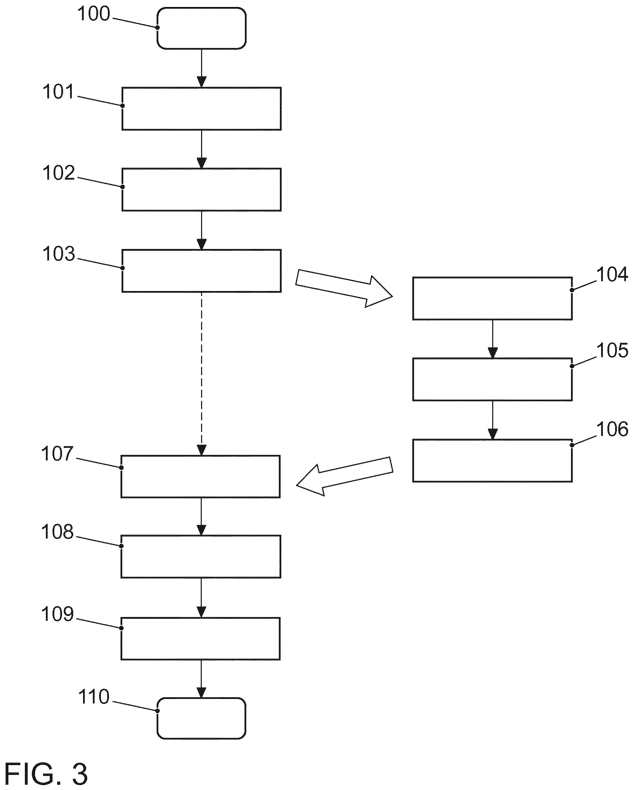

In Fig. 3 ist ein schematisches Ablaufdiagramm des Verfahrens zum Betreiben des Systems 10 zum automatisierten Fahren mindestens eines Kraftfahrzeugs 50 gezeigt. Die im Folgenden verwendeten Bezugszeichen verweisen dabei auch auf Begriffe bzw. Merkmale in den Figuren 1 und 2.

Nach dem Starten 100 des Verfahrens wird in einem ersten Verfahrensschritt 101 von der Positionsermittlungseinrichtung 3 der Fahrzeugvorrichtung 1 des Kraftfahrzeugs 50 eine aktuelle Position des Kraftfahrzeugs 50 ermittelt. Die aktuelle Position ist dabei im Vergleich zu einer späteren Lokalisierung auf Grundlage der in einer Trajektorie hinterlegten Merkmale im Umfeld nur eine grobe Schätzung und ist als initiale Positionsbestimmung der aktuellen Position des Fahrzeugs anzusehen.

Im nächsten Verfahrensschritt 102 wird dann von der Steuerung 2 eine Kommunikationsverbindung 5 über die Kommunikationseinrichtung 4 zum Server 6 aufgebaut. In einem anschließenden Verfahrensschritt 103 wird die ermittelte aktuelle Position des Kraftfahrzeugs 50 von der Steuerung 2 über die Kommunikationsverbindung 5 an den Server 6 übermittelt.

Ferner kann vorgesehen sein, dass zusätzlich mindestens ein Auswahlkriterium an den Server 6 übermittelt wird. Ein solches Auswahlkriterium kann beispielsweise eine Individualisierungsinformation, beispielsweise eine Kennung des Kraftfahrzeugs 50 oder eine Nutzerkennung sein. Auch eine Zustandsinformation, beispielsweise ein Witterungszustand oder ein Tageszeit, ein Wochentag, ein Monat oder eine Jahreszeit, kann ein solches Auswahlkriterium bilden. Ferner ist ebenfalls möglich, dass das mindestens eine Auswahlkriterium ein Fahrzeugtyp oder ein Parameter des Fahrzeugs ist, beispielsweise eine Typenbezeichnung, eine Wagenklasse, äußere Abmessungen des Fahrzeugs, eine Türenkonfiguration (Dreitürer, Fünftürer etc.), ein Reifenzustand (Sommerreifen/Winterreifen) oder ein Beladungszustand usw.

In einem weiteren Verfahrensschritt 104 empfängt der Server 6 die übermittelte aktuelle Position des Kraftfahrzeugs über die Kommunikationsverbindung 5. Zusätzlich wird gegebenenfalls das übermittelte Auswahlkriterium empfangen. Im nächsten Verfahrensschritt 105 sucht der Server 6 auf Grundlage der empfangenen aktuellen Position hinterlegte Trajektorien auf, wobei die hinterlegten Trajektorien zumindest durch einen Toleranzbereich um die empfangene aktuelle Position des mindestens einen Kraftfahrzeugs 50 verlaufen müssen. Die Trajektorien können beispielsweise in einer Karte, welche mit globalen Positionsdaten versehen ist, in dem Server 6 hinterlegt sein. Der Server 6 bildet dann um die empfangene aktuelle Position des Kraftfahrzeugs 50 den Toleranzbereich, beispielsweise einen Umkreis mit einem Radius von 20 bis 30 m und überprüft, ob Trajektorien hinterlegt sind, die diesen Toleranzbereich durchlaufen. Der Radius des Toleranzbereichs kann auch kleiner gewählt werden und nur einige Meter oder sogar nur Zentimeter oder Dezimeter betragen. Die aufgefundenen Trajektorien werden von dem Server 6 bereitgestellt.

Die aufgefundenen Trajektorien können durch ein gegebenenfalls zusätzlich übermitteltes Auswahlkriterium eingeschränkt werden. So ist es beispielsweise möglich, dass nur hinterlegte Trajektorien bereitgestellt werden, denen eine vorgegebene Individualisierungsinformation zugeordnet ist. Auf diese Weise ist es möglich, dass einem Fahrer, einem Passagier oder einem Fahrzeug 49 Trajektorien zugeordnet werden, die ausschließlich diesem bereitgestellt werden. Ferner ist es auch möglich, dass Gruppen von Trajektorien von mehreren Fahrern, Passagieren oder Fahrzeugen 49 gebildet und gemeinsam genutzte Trajektorien mit einer entsprechenden Individualisierungsinformation versehen sind. Auch ein Bereitstellen von hinterlegten Trajektorien, beispielsweise für Gäste, die mit ihrem Kraftfahrzeug 50 anreisen, das Umfeld auf dem Grundstück oder in einem Parkhaus aber nicht kennen, ist möglich. Für ein Grundstück oder ein Parkhaus sind dann Trajektorien hinterlegt, welche nur diesen Gästen über eine entsprechende Individualisierungsinformation bereitgestellt werden können. Die Verwaltung von Trajektorien wird somit komfortabler und flexibler ausgestaltet.

Die aufgefundenen und bereitgestellten hinterlegten Trajektorien werden im nächsten Verfahrensschritt 106 von dem Server 6 über die Kommunikationsverbindung 5 an die Fahrzeugvorrichtung 1 des Kraftfahrzeugs 50 übermittelt.

Im anschließenden Verfahrensschritt 107 empfängt die Fahrzeugvorrichtung 1 die vom Server 6 übermittelten Trajektorien über die Kommunikationsverbindung 5. Hierbei kann vorgesehen sein, dass die Trajektorien komplett, das heißt mit allen jeweils hinterlegten weiteren Daten, übermittelt werden. Ferner kann aber auch vorgesehen sein, dass nur ein Teil der weiteren Daten übermittelt wird und erst nach einem Auswählen einer Trajektorie im nächsten Verfahrensschritt 108 lediglich für die ausgewählte Trajektorie vollständige Daten vom Server an die Fahrzeugvorrichtung übermittelt werden.

Im nächsten Verfahrensschritt 108 wird die empfangene mindestens eine hinterlegte Trajektorie oder, sofern mehrere aufgefunden wurden, eine der mehreren empfangenen hinterlegten Trajektorien ausgewählt. Dies kann automatisch durch die Steuerung 2 auf Grundlage eines Auswahlparameters erfolgen. Insbesondere kann hierbei vorgesehen sein, dass der Auswahlparameter eine Nutzerinteraktion ist. Hierzu werden die empfangenen Trajektorien einem Nutzer, beispielsweise dem Fahrer des Kraftfahrzeugs 50, zur Auswahl angeboten. Dies kann beispielsweise auf einer Anzeige- und Bedieneinrichtung erfolgen. Eine solche Anzeige- und Bedieneinrichtung kann beispielsweise eine Anzeige- und Bedieneinrichtung des Kraftfahrzeugs 50 sein, beispielsweise eine Multimediamittelkonsole. Hierzu kann aber auch eine mobile Anzeige- und Bedieneinrichtung, beispielsweise ein Smartphone oder ein Tabletcomputer, verwendet werden.

Insbesondere kann hierbei vorgesehen sein, dass bei mehreren aufgefundenen und übermittelten Trajektorien, welche einen gemeinsamen Abschnitt, beispielsweise dieselbe Grundstücksauffahrt, aufweisen, sich jedoch anschließend in unterschiedliche Parkpositionen verzweigen, vorgesehen sein, dass die mehreren Trajektorien in Form eines Trajektorienbaumes dargestellt werden. Ein Nutzer kann dann über eine entsprechende Nutzerinteraktion an der Anzeige- und Bedieneinrichtung eine der Trajektorien bzw. einen der Äste des Trajektorienbaumes und somit gewünschte Parkposition auswählen.

Ist die Auswahl getroffen, so wird die automatisierte Fahrt entlang der ausgewählten und bereitgestellten Trajektorie in einem letzten Verfahrensschritt 109 durchgeführt, indem die Steuerung 2 entsprechende Signale zum Steuern einer Längsregelung 51 und einer Querregelung 52 des Kraftfahrzeugs 50 bereitstellt. Ist die Parkposition erreicht, so ist das Verfahren beendet 110.

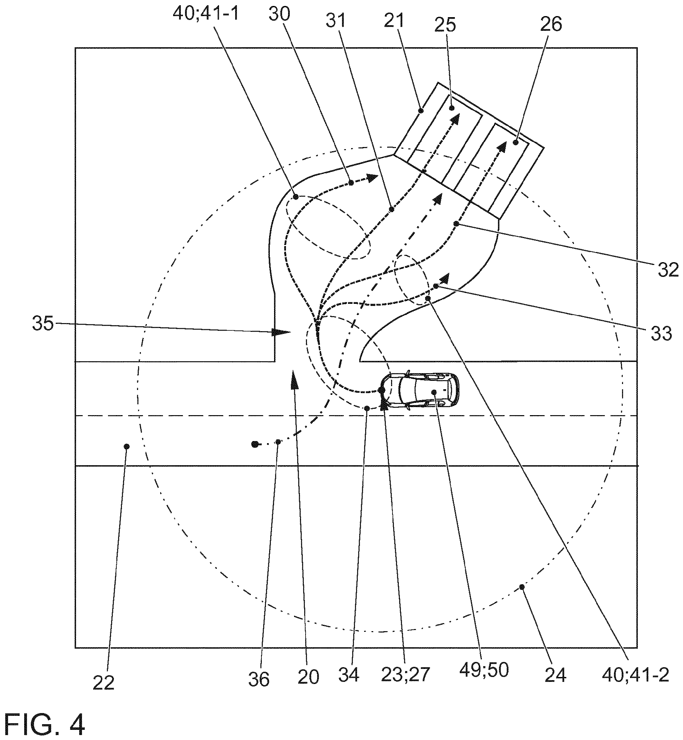

Fig. 4 zeigt eine schematische Darstellung einer Grundstücksauffahrt 20 und einer Doppelgarage 21 zur Verdeutlichung des Verfahrens. Ein Kraftfahrzeug 50 befindet sich auf einer Straße 22 vor einer Grundstücksauffahrt 20. Eine aktuelle Position 23 des Kraftfahrzeugs 50 wird gemäß des oben beschriebenen Verfahrens an den Server 6 übermittelt. Der Server 6 sucht um die aktuelle Position 23 herum hinterlegte Trajektorien 30, 31, 32, 33 auf, welche durch einen Toleranzbereich 24 verlaufen, und übermittelt diese zurück an das Kraftfahrzeug 50. Dabei besitzen die hinterlegten Trajektorien 30, 31, 32, 33 vorzugsweise ihren Anfangspunkt 27 innerhalb des Toleranzbereichs 24. Einige Ausführungsformen sehen vor, dass der Anfangspunkt 27 der Trajektorien in dem Toleranzbereich 24 liegen muss. In jedem Fall muss es möglich sein, das Fahrzeug 50 in die hinterlegten Trajektorien 30, 31, 32, 33 bei ausschließlichem Befahren eines befahrbaren Bereichs zu "überführen", wobei eine Pose (Position und Orientierung) des Kraftfahrzeugs 50 ebenso wie andere Randbedingungen, beispielsweise ein minimaler Kurvenradius des Kraftfahrzeugs 50 etc., zu berücksichtigen sind. Zum Bestimmen oder zur Plausibilisierung des befahrbaren Bereichs können beispielsweise auch andere Trajektorien 36 dienen. In diesem Beispiel definiert die andere Trajektorie 36 beispielsweise einen befahrbaren Bereich auf der rechten Seite der Garageneinfahrt 22.

Die übermittelten Trajektorien 30, 31, 32, 33 haben beispielsweise am Anfang alle einen gemeinsamen Abschnitt 34. Die Trajektorien 30, 31, 32, 33 können deshalb zu einem Trajektorienbaum 35 zusammengefasst werden. Beim Anbieten zur Auswahl einer der Trajektorien 30, 31, 32, 33 auf einer Anzeige- und Bedieneinrichtung können die Trajektorien 30, 31, 32, 33 dann beispielsweise auch als Trajektorienbaum 35 dargestellt werden.

Die Trajektorien 30, 31, 32, 33 können mit einem Auswahlkriterium 40 versehen sein, beispielsweise einer Individualisierungsinformation 41-1, 41-2. Eine solche Individualisierungsinformation 41-1, 41-2 kann beispielsweise eine Kennung des Kraftfahrzeugs 50 sein. Gehört das Grundstück und die Doppelgarage 21 beispielsweise einem Ehepaar, so kann die linke Garage 25 der Ehefrau zugeordnet sein, die rechte Garage 26 hingegen dem Ehemann. Entsprechend können die Trajektorien 30, 31 mit der Individualisierungsinformation 41-1 für die Ehefrau versehen sein, die Trajektorien 32, 33 hingegen mit der Individualisierungsinformation 41-2 für den Ehemann. Wird die jeweilige Individualisierungsinformation 41-1, 41-2 als Auswahlkriterium benutzt, so werden von dem Server 6 nur diejenigen Trajektorien 30, 31, 32, 33 aufgefunden und bereitgestellt, denen die entsprechende Individualisierungsinformation 41-1, 41-2 zugeordnet sind. Ist beispielsweise die Individualisierungsinformation 41-1 übermittelt worden, weil sich die Ehefrau in ihrem Kraftfahrzeug 50 vor der Grundstückseinfahrt 20 befindet, so würden nur die beiden Trajektorien 30, 31 bis vor bzw. bis in die linke Garage 25 bereitgestellt werden. Entsprechend würden für den Ehemann mit der Individualisierungsinformation 41-2 nur die beiden Trajektorien 32, 33 bis vor oder in die rechte Garage 26 bereitgestellt werden. Der Vorteil einer solchen Individualisierungsinformation 41-1, 41-2 ist, dass eine bessere und individuelle Verwaltung der Trajektorien 30, 31, 32, 33 möglich ist. Darüber hinaus ist es möglich, einer Trajektorie 30, 31, 32, 33 auch mehr als eine Individualisierungsinformation 41-1, 41-2 zuzuordnen.

Ferner ist es möglich, dass das Auswahlkriterium ein Zustandsparameter ist. Dies kann beispielsweise ein Witterungszustand sein. Ist die Garage 21 beispielsweise mit einer abschüssigen Einfahrt versehen, so kann es gewünscht sein, bei Glatteis nicht in der Garage 21 zu parken, sondern vor der Garage 21, da eine Einfahrt oder Ausfahrt in die Garage 21 zu gefährlich oder mühsam ist. Wird eine entsprechende Witterung festgestellt, beispielsweise durch Erfassen entsprechender Signale an einem Temperatur-, Regen- und/oder Schneesensor in dem Kraftfahrzeug 50, dann wird der entsprechende Zustandsparameter dem Server 6 übermittelt und der Server 6 stellt ausschließlich Trajektorien 30, 33 außerhalb der Garage 21 bereit. Auf diese Weise kann die Verwaltung der hinterlegten Trajektorien 30, 31, 32, 33 verbessert werden, wodurch sich der Komfort und die Sicherheit erhöhen.

### Bezugszeichenliste

- 1: Fahrzeugvorrichtung
- 2: Steuerung
- 3: Positionsermittlungseinrichtung
- 4: Kommunikationseinrichtung
- 5: Kommunikationsverbindung
- 6: Server
- 7: Zwischenspeicher
- 10: System
- 20: Grundstücksauffahrt
- 21: Doppelgarage
- 22: Straße
- 23: aktuelle Position
- 24: Toleranzbereich
- 25: linke Garage
- 26: rechte Garage
- 27: Anfangspunkt
- 30: Trajektorie
- 31: Trajektorie
- 32: Trajektorie
- 33: Trajektorie
- 34: gemeinsamer Abschnitt
- 35: Trajektorienbaum
- 36: andere Trajektorie
- 40: Auswahlkriterium
- 41-1: Individualisierungsinformation
- 41-2: Individualisierungsinformation
- 49: Fahrzeug
- 50: Kraftfahrzeug
- 51: Längsregelung
- 52: Querregelung
- 100-110: Verfahrensschritte

## Patentansprüche

1. Verfahren zum automatisierten Fahren eines Fahrzeugs (49), insbesondere eines Kraftfahrzeugs (50), zum Ansteuern einer Parkposition, umfassend die folgenden Schritte:
Bereitstellen einer Trajektorie (30, 31, 32, 33) für eine Steuerung (2) des Fahrzeugs (49), Erzeugen von Signalen zum Steuern einer Bewegung des Fahrzeugs (49) entlang der bereitgestellten Trajektorie (30, 31, 32, 33),
wobei
das Bereitstellen der Trajektorie (30, 31, 32, 33) folgende Schritte umfasst:
Ermitteln einer aktuellen Position (23) des Fahrzeugs (49) durch eine Positionsermittlungseinrichtung (3),
Aufbauen einer Kommunikationsverbindung (5) zu einem Server (6) außerhalb des Fahrzeugs (49) durch eine Kommunikationseinrichtung (4),
Übermitteln der ermittelten aktuellen Position (23) des Fahrzeugs (49) an den Server (6) über die Kommunikationsverbindung (5),
Abrufen und Empfangen mindestens einer beim Server (6) hinterlegten Trajektorie (30, 31, 32, 33) über die Kommunikationsverbindung (5), wobei die abgerufene und empfangene Trajektorie (30, 31, 32, 33) zumindest durch einen Toleranzbereich (24) um die ermittelte aktuelle Position (23) des Fahrzeugs (49) verläuft
**dadurch gekennzeichnet, dass**,
wenn zu der mindestens einen abgerufene und empfangenen Trajektorie (30, 31, 32, 33) eine weitere Trajektorie (30, 31, 32, 33) abgerufen und empfangen wird, von der Steuerung (2) eine dieser Trajektorien (30, 31, 32, 33) in Abhängigkeit eines Auswahlparameters ausgewählt wird.

2. Verfahren nach Anspruch 1, **dadurch gekennzeichnet, dass** zusätzlich zu der aktuellen Position (23) des Fahrzeugs (49) mindestens ein Auswahlkriterium (40) an den Server (6) übermittelt wird.

3. Verfahren nach Anspruch 2, **dadurch gekennzeichnet, dass** das mindestens eine Auswahlkriterium (40) eine Individualisierungsinformation (41-1, 41-2) umfasst.

4. Verfahren nach Anspruch 2 oder 3, **dadurch gekennzeichnet, dass** das mindestens eine Auswahlkriterium (40) einen Zustandsparameter umfasst.

5. Verfahren nach einem der vorangegangenen Ansprüche , **dadurch gekennzeichnet, dass** der Auswahlparameter aus einer erfassten Nutzerinteraktion abgeleitet wird, wobei die mindestens eine abgerufene und empfangene Trajektorie (30, 31, 32, 33) und die weitere abgerufene und empfangene Trajektorie (30, 31, 32, 33) einem Nutzer vor einem Erfassen der Nutzerinteraktion zur Auswahl angeboten werden.

6. Verfahren nach einem der vorangegangenen Ansprüche, **dadurch gekennzeichnet, dass** Trajektoriendaten einer Trajektorie des Fahrzeugs (49) über Erfassungsmittel erfasst werden und von der Steuerung (2) aufgezeichnet und über die Kommunikationsverbindung (5) an den Server (6) übermittelt werden.

7. Verfahren nach einem der vorangegangenen Ansprüche, **dadurch gekennzeichnet, dass** die mindestens eine von dem Server (6) empfangene Trajektorie (30, 31, 32, 33) in einem Zwischenspeicher (7) im Fahrzeug (49) hinterlegt wird.

8. Fahrzeugvorrichtung (1) für ein Fahrzeug (49) zum automatisierten Fahren des Fahrzeugs (49), insbesondere eines Kraftfahrzeugs (50), zum Ansteuern einer Parkposition, umfassend:
eine Steuerung (2), welche derart ausgebildet ist, Signale zum Steuern einer Bewegung des Fahrzeugs (49) entlang einer bereitgestellten Trajektorie (30, 31, 32, 33) zu erzeugen, wobei die Fahrzeugvorrichtung (1) eine Positionsermittlungseinrichtung (3) und eine Kommunikationseinrichtung (4) umfasst, wobei die Positionsermittlungseinrichtung (3) derart ausgebildet ist, eine aktuelle Position (23) des Fahrzeugs (49) zu ermitteln, und
wobei die Steuerung (2) ferner derart ausgebildet ist, eine Kommunikationsverbindung (5) zu einem Server (6) außerhalb des Fahrzeugs (49) über die Kommunikationseinrichtung (4) aufzubauen, die ermittelte aktuelle Position (23) des Fahrzeugs (49) an den Server (6) zu übermitteln, und mindestens eine beim Server (6) hinterlegte Trajektorie (30, 31, 32, 33) über die Kommunikationsverbindung (5) abzurufen und zu empfangen,
**dadurch gekennzeichnet, dass**
die Steuerung (2) ferner derart ausgebildet ist, wenn zu der mindestens einen abgerufene und empfangenen Trajektorie (30, 31, 32, 33) eine weitere Trajektorie (30, 31, 32, 33) abgerufen und empfangen wird, eine dieser Trajektorien (30, 31, 32, 33) in Abhängigkeit eines Auswahlparameters auszuwählen.

9. Verfahren zum Betreiben eines Systems (10) zum automatisierten Fahren mindestens eines Fahrzeugs (49), insbesondere eines Kraftfahrzeugs (50), umfassend die folgenden Schritte:
- Durchführen eines Verfahrens gemäß einem der Ansprüche 1 bis 7 durch mindestens ein Fahrzeug (49),
- Durchführen der folgenden Schritte in einem Server (6):
- Empfangen einer aktuellen Position (23) des mindestens einen Fahrzeugs (49) über eine Kommunikationsverbindung (5) mit dem mindestens einen Fahrzeug (49),
- Aufsuchen und Bereitstellen mindestens einer hinterlegten Trajektorie (30, 31, 32, 33), wobei die hinterlegte Trajektorie (30, 31, 32, 33) zumindest durch einen Toleranzbereich (24) um die empfangene aktuelle Position (23) des mindestens einen Fahrzeugs (49) verläuft,
- Übermitteln der aufgefundenen und bereitgestellten mindestens einen hinterlegten Trajektorie (30, 31, 32, 33) über die Kommunikationsverbindung (5) an das mindestens eine Fahrzeug (49).

10. Verfahren nach Anspruch 9, **dadurch gekennzeichnet, dass** zu einer in dem mindestens einen Fahrzeug (49) aufgezeichneten Trajektorie Trajektoriendaten von dem Server (6) empfangen werden und in dem Server (6) hinterlegt werden oder eine in dem Server (6) hinterlegte Trajektorie (30, 31, 32, 33) durch die empfangenen Trajektoriendaten aktualisiert und/oder ergänzt wird.

11. Verfahren nach einem der Ansprüche 9 oder 10, **dadurch gekennzeichnet, dass** mehrere für einen Bereich hinterlegte Trajektorien (30, 31, 32, 33) von dem Server (6) zu einem Trajektorienbaum (35) zusammengefasst werden, sofern die mehreren Trajektorien (30, 31, 32, 33) gemeinsame Abschnitte (34) aufweisen, und von dem Server (6) entsprechend auch als Trajektorienbaum (35) bereitgestellt und an das mindestens eine Fahrzeug (49) übermittelt werden.

12. Verfahren nach einem der Ansprüche 9 bis 11, **dadurch gekennzeichnet, dass** mindestens ein Auswahlkriterium (40) des mindestens einen Fahrzeugs (49) vom Server (6) empfangen wird und das Aufsuchen und Bereitstellen der mindestens einen hinterlegten Trajektorie (30, 31, 32, 33) in Abhängigkeit des empfangenen Auswahlkriteriums (40) durchgeführt wird.

13. System (10) zum automatisierten Fahren eines Fahrzeugs (49), insbesondere eines Kraftfahrzeugs (50), zum Ansteuern einer Parkposition umfassend:
mindestens ein Fahrzeug (49) mit einer Fahrzeugvorrichtung (1) gemäß Anspruch 8,
**dadurch gekennzeichnet, dass**
das System (10) einen Server (6) umfasst, wobei der Server (6) derart ausgebildet ist, die ermittelte aktuelle Position (23) des mindestens einen Fahrzeugs (49) über die Kommunikationsverbindung (5) zu empfangen, mindestens eine hinterlegte Trajektorie (30, 31, 32, 33) aufzusuchen und bereitzustellen, wobei die bereitgestellte mindestens eine Trajektorie (30, 31, 32, 33) zumindest durch einen Toleranzbereich (24) um die empfangene aktuelle Position des mindestens einen Fahrzeugs (49) verläuft, und die bereitgestellte mindestens eine hinterlegte Trajektorie (30, 31, 32, 33) über die Kommunikationsverbindung (5) an das mindestens eine Fahrzeug (49) zu übermitteln.

## Claims

1. Method for automatically driving a vehicle (49), in particular a motor vehicle (50), to drive to a parking position, comprising the following steps:
providing a trajectory (30, 31, 32, 33) for a controller (2) of the vehicle (49), generating signals for controlling a movement of the vehicle (49) along the provided trajectory (30, 31, 32, 33),
wherein
providing the trajectory (30, 31, 32, 33) comprises the following steps:
determining a current position (23) of the vehicle (49) via a position determination device (3),
establishing a communication link (5) to a server (6) outside of the vehicle (49) via a communication device (4),
transmitting the determined current position (23) of the vehicle (49) to the server (6) via the communication link (5),
retrieving and receiving at least one trajectory (30, 31, 32, 33) stored at the server (6) via the communication link (5), wherein the retrieved and
received trajectory (30, 31, 32, 33) runs at least through a tolerance range (24) around the determined current position (23) of the vehicle (49),
**characterized in that**
if an additional trajectory (30, 31, 32, 33) is retrieved and received in addition to the at least one retrieved and received trajectory (30, 31, 32, 33), one of these trajectories (30, 31, 32, 33) is selected by the controller (2) as a function of a selection parameter.

2. Method according to claim 1, **characterized in that,** in addition to the current position (23) of the vehicle (49), at least one selection criterion (40) is transmitted to the server (6).

3. Method according to claim 2, **characterized in that** the at least one selection criterion (40) comprises individualization information (41-1, 41-2).

4. Method according to claim 2 or 3, **characterized in that** the at least one selection criterion (40) comprises a condition parameter.

5. Method according to one of the preceding claims, **characterized in that** the selection parameter is derived from a detected user interaction, wherein the at least one retrieved and received trajectory (30, 31, 32, 33) and the additional retrieved and received trajectory (30, 31, 32, 33) are offered to a user for selection before the user interaction is detected.

6. Method according to one of the preceding claims, **characterized in that** trajectory data of a trajectory of the vehicle (49) are detected via detection means and are recorded by the controller (2) and transmitted to the server (6) via the communication link (5).

7. Method according to one of the preceding claims, **characterized in that** the at least one trajectory (30, 31, 32, 33) received from the server (6) is stored in a buffer (7) in the vehicle (49).

8. Vehicle device (1) for a vehicle (49) for automatically driving the vehicle (49), in particular a motor vehicle (50), to drive to a parking position, comprising:
a controller (2) which is designed to generate signals for controlling a movement of the vehicle (49) along a provided trajectory (30, 31, 32, 33),
wherein the vehicle device (1) comprises a position determination device (3) and a communication device (4), wherein the position determination device (3) is designed to detect a current position (23) of the vehicle (49), and
wherein the controller (2) is further designed to establish a communication link (5) to a server (6) outside the vehicle (49) via the communication device (4), to transmit the determined current position (23) of the vehicle (49) to the server (6), and to retrieve and receive at least one trajectory (30, 31, 32, 33) stored at the server (6) via the communication link (5),
**characterized in that**
the controller (2) is further designed to select, if an additional trajectory (30, 31, 32, 33) is retrieved and received in addition to the at least one retrieved and received trajectory (30, 31, 32, 33), one of these trajectories (30, 31, 32, 33) as a function of a selection parameter.

9. Method for operating a system (10) for automatically driving at least one vehicle (49), in particular a motor vehicle (50), comprising the following steps:
- carrying out a method according to one of claims 1 to 7 via at least one vehicle (49),
- carrying out the following steps in a server (6):
- receiving a current position (23) of the at least one vehicle (49) via a communication link (5) with the at least one vehicle (49),
- searching for and providing at least one stored trajectory (30, 31, 32, 33), wherein the stored trajectory (30, 31, 32, 33) runs at least through a tolerance range (24) around the received current position (23) of the at least one vehicle (49),
- transmitting the found and provided at least one stored trajectory (30, 31, 32, 33) to the at least one vehicle (49) via the communication link (5).

10. Method according to claim 9, **characterized in that** trajectory data for a trajectory recorded in the at least one vehicle (49) are received by the server (6) and stored in the server (6), or a trajectory (30, 31, 32, 33) stored in the server (6) is updated and/or supplemented by the received trajectory data.

11. Method according to one of claims 9 or 10, **characterized in that** a plurality of trajectories (30, 31, 32, 33) stored for one area are combined by the server (6) to form a trajectory tree (35), insofar as the plurality of trajectories (30, 31, 32, 33) have common segments (34), and are accordingly also provided by the server (6) as a trajectory tree (35) and are transmitted to the at least one vehicle (49).

12. Method according to one of claims 9 to 11, **characterized in that** at least one selection criterion (40) of the at least one vehicle (49) is received by the server (6), and the search for and provision of the at least one stored trajectory (30, 31, 32, 33) are carried out as a function of the received selection criterion (40).

13. System (10) for automatically driving a vehicle (49), in particular a motor vehicle (50), to drive to a parking position, comprising:
at least one vehicle (49) with a vehicle device (1) according to claim 8,
**characterized in that**
the system (10) comprises a server (6), wherein the server (6) is designed to receive the determined current position (23) of the at least one vehicle (49) via the communication link (5), to search for and provide at least one stored trajectory (30, 31, 32, 33), wherein the provided at least one trajectory (30, 31, 32, 33) runs at least through a tolerance range (24) around the received current position of the at least one vehicle (49), and to transmit the provided at least one stored trajectory (30, 31, 32, 33) via the communication link (5) to the at least one vehicle (49).

## Revendications

1. Procédé pour la conduite automatisée d'un véhicule (49), en particulier d'un véhicule automobile (50), pour se diriger vers une position de stationnement, comprenant les étapes suivantes : fourniture d'une trajectoire (30, 31, 32, 33) pour une commande (2) du véhicule (49), production de signaux permettant de commander un déplacement du véhicule (49) le long de la trajectoire fournie (30, 31, 32, 33),
dans lequel
la fourniture de la trajectoire (30, 31, 32, 33) comprend les étapes suivantes :
détermination d'une position actuelle (23) du véhicule (49) au moyen d'un dispositif de détermination de position (3),
établissement d'une liaison de communication (5) vers un serveur (6) en dehors du véhicule (49) au moyen d'un dispositif de communication (4),
transmission de la position actuelle (23) du véhicule (49) au serveur (6) par le biais de la liaison de communication (5),
appel et réception d'au moins une trajectoire (30, 31, 32, 33) enregistrée sur le serveur (6) par le biais de la liaison de communication (5), la trajectoire appelée et reçue (30, 31, 32, 33) s'étendant au moins à travers une zone de tolérance (24) autour de la position actuelle (23) déterminée du véhicule (49)
**caractérisé en ce que**
lorsque, en plus de l'au moins une trajectoire (30, 31, 32, 33) appelée et reçue, une autre trajectoire (30, 31, 32, 33) est appelée et reçue, une de ces trajectoires (30, 31, 32, 33) est sélectionnée par la commande (2) en fonction d'un paramètre de sélection.

2. Procédé selon la revendication 1, **caractérisé en ce que,** en plus de la position actuelle (23) du véhicule (49), au moins un critère de sélection (40) est transmis au serveur (6).

3. Procédé selon la revendication 2, **caractérisé en ce que** l'au moins un critère de sélection (40) comprend une information d'individualisation (41-1, 41-2).

4. Procédé selon la revendication 2 ou 3, **caractérisé en ce que** l'au moins un critère de sélection (40) comprend un paramètre d'état.

5. Procédé selon l'une quelconque des revendications précédentes, **caractérisé en ce que** le paramètre de sélection est dérivé d'une interaction détectée de l'utilisateur, l'au moins une trajectoire appelée et reçu (30, 31, 32, 33) et l'autre trajectoire appelée et reçue (30, 31, 32, 33) étant proposées à l'utilisateur pour une sélection avant une détection de l'interaction de l'utilisateur.

6. Procédé selon l'une quelconque des revendications précédentes, **caractérisé en ce que** des données de trajectoire d'une trajectoire du véhicule (49) sont détectées au moyen de moyens de détection et sont enregistrées par la commande (2) et transmises par le biais de la liaison de communication (5) au serveur (6).

7. Procédé selon l'une quelconque des revendications précédentes, **caractérisé en ce que** l'au moins une trajectoire (30, 31, 32, 33) reçue par le serveur (6) est enregistrée dans une mémoire tampon (7) dans le véhicule (49).

8. Dispositif de véhicule (1) pour un véhicule (49) pour la conduite automatisée du véhicule (49), en particulier d'un véhicule automobile (50), pour se diriger vers une position de stationnement, comprenant :
une commande (2), qui est conçue pour produire des signaux permettant de commander un déplacement du véhicule (49) le long d'une trajectoire fournie (30, 31, 32, 33), le dispositif de véhicule (1) comprenant un dispositif de détermination de position (3) et un dispositif de communication (4), le dispositif de positionnement (3) étant conçu pour déterminer une position actuelle (23) du véhicule (49) et la commande (2) étant en outre conçue pour établir une liaison de communication (5) vers un serveur (6) en dehors du véhicule (49) au moyen du dispositif de communication (4), transmettre la position actuelle déterminée (23) du véhicule (49) au serveur (6) et appeler et recevoir au moins une trajectoire (30, 31, 32, 33) enregistrée sur le serveur (6) par le biais de la liaison de communication (5),
**caractérisé en ce que**
la commande (2) est en outre conçue pour, lorsque, en plus de l'au moins une trajectoire (30, 31, 32, 33) appelée et reçue, une autre trajectoire (30, 31, 32, 33) est appelée et reçue, sélectionner une de ces trajectoires (30, 31, 32, 33) en fonction d'un paramètre de sélection.

9. Procédé permettant de faire fonctionner un système (10) pour la conduite automatisée d'au moins un véhicule (49), en particulier d'un véhicule automobile (50), comprenant les étapes suivantes :
- réalisation d'un procédé selon l'une quelconque des revendications 1 à 7 par au moins un véhicule (49),
- réalisation des étapes suivantes dans un serveur (6) :
- réception d'une position actuelle (23) de l'au moins un véhicule (49) par le biais d'une liaison de communication (5) avec l'au moins un véhicule (49),
- recherche et fourniture d'au moins une trajectoire (30, 31, 32, 33) enregistrée, la trajectoire enregistrée (30, 31, 32, 33) s'étendant au moins à travers une zone de tolérance (24) autour de la position actuelle (23) reçue de l'au moins un véhicule (49),
- transmission de l'au moins une trajectoire (30, 31, 32, 33) enregistrée trouvée et fournie à l'au moins un véhicule (49) par le biais de la liaison de communication (5).

10. Procédé selon la revendication 9, **caractérisé en ce que** pour une trajectoire enregistrée dans l'au moins un véhicule (49), des données de trajectoires sont reçues par le serveur (6) et sont enregistrées dans le serveur (6) ou une trajectoire (30, 31, 32, 33) enregistrée dans le serveur (6) est mise à jour et/ou complétée par les données de trajectoire reçues.

11. Procédé selon l'une quelconque des revendications 9 ou 10, **caractérisé en ce que** plusieurs trajectoires (30, 31, 32, 33) enregistrées pour une zone sont combinées par le serveur (6) en une arborescence de trajectoires (35), dans la mesure où les plusieurs trajectoires (30, 31, 32, 33) présentent des sections communes (34) et sont fournies de manière correspondante par le serveur (6) comme arborescence de trajectoires (35) et transmises à l'au moins un véhicule (49).

12. Procédé selon l'une quelconque des revendications 9 à 11, **caractérisé en ce qu'**au moins un critère de sélection (40) de l'au moins un véhicule (49) est reçu par le serveur (6) et la recherche et fourniture de l'au moins une trajectoire (30, 31, 32, 33) enregistrée sont effectuées en fonction du critère de sélection (40) reçu.

13. Système (10) pour la conduite automatisée d'un véhicule (49), en particulier d'un véhicule automobile (50), pour se diriger vers une position de stationnement, comprenant :
au moins un véhicule (49) comprenant un dispositif de véhicule (1) selon la revendication 8, **caractérisé en ce que**
le système (10) comprend un serveur (6), le serveur (6) étant conçu pour recevoir la position actuelle déterminée (23) de l'au moins un véhicule (49) par le biais de la liaison de communication (5), chercher et fournir au moins une trajectoire (30, 31, 32, 33) enregistrée, l'au moins une trajectoire (30, 31, 32, 33) fournie s'étendant au moins à travers une zone de tolérance (24) autour de la position actuelle reçue de l'au moins un véhicule (49) et transmettre l'au moins une trajectoire (30, 31, 32, 33) enregistrée fournie à l'au moins un véhicule (49) par le biais de la liaison de communication (5).
